# EUROPÄISCHE PATENTSCHRIFT

(11) **EP 3 939 832 B1**
(45) Veröffentlichungstag und Bekanntmachung des Hinweises auf die Patenterteilung: **01.05.2024**
(21) Anmeldenummer: 21184431.1
(22) Anmeldetag: 08.07.2021
(51) Int. Cl.: B60P 7/08

(54) **ZURRVORRICHTUNG FÜR EIN NUTZFAHRZEUG, NUTZFAHRZEUG MIT EINER SOLCHEN ZURRVORRICHTUNG UND HERSTELLUNGSVERFAHREN**
LASHING DEVICE FOR A COMMERCIAL VEHICLE, COMMERCIAL VEHICLE WITH SUCH A LASHING DEVICE AND MANUFACTURING METHOD
DISPOSITIF D'ARRIMAGE POUR UN VÉHICULE UTILITAIRE, VÉHICULE UTILITAIRE DOTÉ D'UN TEL DISPOSITIF D'ARRIMAGE ET PROCÉDÉ DE FABRICATION

(30) Priorität: 15.07.2020 DE 102020118717
(43) Veröffentlichungstag der Anmeldung: 19.01.2022
(73) Patentinhaber: Humbaur GmbH, 86368 Gersthofen (DE)
(72) Erfinder: Braun, Peter, 86415 Mering (DE)
(74) Vertreter: Meissner Bolte Partnerschaft mbB

(56) Entgegenhaltungen:
- EP-B1- 1 044 846
- DE-A1- 19 726 974
- US-B1- 9 308 855

## Beschreibung

Die Erfindung betrifft eine Zurrvorrichtung für ein Nutzfahrzeug gemäß dem Oberbegriff des Patentanspruchs 1. Ferner betrifft die Erfindung ein Nutzfahrzeug mit einer solchen Zurrvorrichtung sowie ein Herstellungsverfahren. Eine Zurrvorrichtung der eingangs genannten Art ist beispielsweise aus DE 297 18 318 U1 bekannt.

Zurrvorrichtungen dienen im Allgemeinen dazu, Ladegut auf einem Nutzfahrzeug zu sichern. Dazu wirken die fest am Fahrzeug montierten Zurrvorrichtungen mit einem Zurrmittel, beispielsweise einem Spanngurt, zusammen. Die Zurrvorrichtungen müssen oft hohe Kräfte aufnehmen, um insbesondere schweres Ladegut sicher an seiner Position zu halten. Dazu sind die Zurrvorrichtungen üblicherweise mit dem Fahrzeug so verbunden, dass die Ladungssicherungskräfte in den Fahrzeugrahmen eingeleitet werden können.

Die aus DE 297 18 218 U1 bekannte Zurrvorrichtung weist einen Zurrring und einen Lagerbock auf, wobei der Zurring mit dem Lagerbock fest auf einem Fahrzeugrahmen bzw. Fahrzeugboden montiert werden kann. Der Zurrring ist dabei im Lagerbock drehbar gelagert, so dass er von einer Benutzungsstellung in eine Nichtbenutzungsstellung geklappt werden kann. Um die hohen Ladungssicherungskräfte in das Fahrzeug überleiten zu können, ist der Lagerbock fest mit dem Fahrzeug verschweißt.

Eine ähnliche Zurrvorrichtung, bei welcher ein Lagerbock fest mit dem Fahrzeug verschweißt ist, um die hohen Kräfte in das Fahrzeug übertragen zu können, ist aus EP 269 886 B1 bekannt.

EP 1 044 846 B1 beschreibt eine Zurrvorrichtung mit zwei Platten, zwischen welchen ein Zurrring beweglich gelagert ist. Die beiden Platten werden gemeinschaftlich mit Schrauben an einer Unterseite eines Ladebodens fixiert. Das hat den Nachteil, dass zum Austausch des Zurrrings beide Platten gelöst werden, was die Handhabung des Austauschs erschwert.

Zurrvorrichtungen kommen oft bei Nutzfahrzeugen zum Einsatz, die zum Transport von Baumaschinen genutzt werden. Die Baumaschinen werden zunächst auf das Nutzfahrzeug aufgefahren und dann mittels der Zurrvorrichtungen gesichert. Aus Vergesslichkeit oder aufgrund von Schmutz, der in die Zurrvorrichtung eingedrungen ist, kommt es vor, dass die Zurrvorrichtung in der aufgeklappten Gebrauchsstellung verbleibt. Wenn die Baumaschine beim Verladen nun die Zurrvorrichtung überfährt, kann diese erheblich beschädigt werden. Bei den bekannten Zurrvorrichtungen ist es nun erforderlich, die feste Schweißverbindung mit dem Fahrzeugrahmen zu lösen, um die beschädigte Zurrvorrichtung ersetzen zu können. Nach dem Fixieren einer neuen Zurrvorrichtung ist überdies der Korrosionsschutz zu erneuern. Dies ist äußerst aufwändig und bedingt oft einem Werkstattaufenthalt, so dass das Nutzfahrzeug für einen längeren Zeitraum nicht genutzt werden kann.

Die Aufgabe der Erfindung besteht darin, eine Zurrvorrichtung anzugeben, die hohen Kräften standhält und gleichzeitig einfach austauschbar ist. Ferner besteht die Aufgabe der Erfindung darin, ein Nutzfahrzeug mit einer solchen Zurrvorrichtung sowie ein Herstellungsverfahren anzugeben.

Erfindungsgemäß wird diese Aufgabe im Hinblick auf die Zurrvorrichtung durch den Gegenstand des Patentanspruchs 1, im Hinblick auf das Nutzfahrzeug durch den Gegenstand des Patentanspruchs 12 und im Hinblick auf das Herstellungsverfahren durch den Gegenstand des Patentanspruchs 13 gelöst.

So beruht die Erfindung auf dem Gedanken, eine Zurrvorrichtung für ein Nutzfahrzeug mit einem Zurrring zur Verbindung mit einem Zurrmittel und mit einem Lagerbock zur Befestigung an einem Fahrzeug anzugeben, wobei der Lagerbock eine Basisplatte zur dauerhaften Befestigung am Fahrzeug und eine Oberplatte zum Halten des Zurrrings aufweist, wobei die Oberplatte lösbar mit der Basisplatte verbindbar oder verbunden ist.

Die Erfindung geht im Allgemeinen auf die Idee zurück, den Lagerbock zweiteilig zu gestalten. Dabei soll die Basisplatte dauerhaft mit dem Fahrzeug verbunden werden, wogegen die Oberplatte mit der Basisplatte lösbar gekoppelt ist. Bei einer Beschädigung des Zurrrings kann nun die Oberplatte von der Basisplatte gelöst werden, so dass der Zurrring einfach ausgetauscht werden kann. Ein längerer Werkstattaufenthalt ist somit nicht mehr erforderlich, um ein Nutzfahrzeug mit neuen Zurrringen auszurüsten. Ein weiterer Vorteil besteht darin, dass mit der Erfindung einfach und schnell unterschiedliche Zurrringe für die Zurrvorrichtung eingesetzt werden können. So können beispielsweise Zurrringe mit unterschiedlichen Materialien, Materialstärken oder Spezifikationen einfach und schnell ausgewechselt werden.

Die Basisplatte weist wenigstens einen Randbereich mit einer Fase auf, die so ausgebildet ist, dass im montierten Zustand der Zurrvorrichtung an einem Fahrzeug zwischen der Fase und einer Fahrzeugfläche eine keilförmige Ausnehmung zur Aufnahme einer Schweißnaht gebildet ist. Auf diese Weise ist gewährleistet, dass einerseits die Basisplatte sicher stoffschlüssig mit dem Fahrzeug verbunden wird. Die Fase bewirkt zusätzlich, dass sich die Schweißnaht in die Ausnehmung zwischen der Fase und der Fahrzeugfläche einfügt, so dass im Wesentlichen ein gleitender Übergang zwischen der Fahrzeugfläche und der Basisplatte erreicht wird. Damit wird der Gefahr einer Beschädigung der Basisplatte beim Beladen des Fahrzeugs vorgebeugt.

Vorzugsweise ist die Oberplatte mit der Basisplatte verschraubt. Eine Schraubverbindung zwischen der Oberplatte und der Basisplatte lässt sich besonders leicht lösen, so dass ein schneller Austausch des Zurrrings möglich ist. Die Basisplatte kann derart angepasst sein, dass eine Schweißverbindung zwischen der Basisplatte und einem Fahrzeug hergestellt werden kann. Im montierten Zustand ist die Basisplatte also vorzugsweise mit dem Fahrzeug fest verschweißt, so dass die Zurrkräfte bzw. Ladungssicherungskräfte gut in das Fahrzeug eingeleitet werden können.

Der Zurrring ist bei einer bevorzugten Ausführungsform der Erfindung in einer zwischen der Basisplatte und der Oberplatte ausgebildeten Lageraufnahme drehbar gelagert. Insbesondere kann vorgesehen sein, dass die Basisplatte und die Oberplatte jeweils einen Kanal aufweisen, der ein halbkreisförmiges Querschnittsprofil umfasst. Sobald die Oberplatte mit der Basisplatte verbunden ist, ergibt sich durch die gegenüberliegenden Kanäle eine rohrförmige Durchgangsöffnung, durch welche der Zurrring hindurchgreifen kann. Die Durchgangsöffnung bildet die Lageraufnahme für den Zurrring, wobei der Zurrring in der Lageraufnahme drehbar gelagert ist. Auf diese Weise kann der Zurrring von einer aufgeklappten Benutzungsstellung in eine abgeklappte Nichtbenutzungsstellung gedreht werden, wobei der Zurrring in der abgeklappten Nichtbenutzungsstellung vorzugsweise auf dem Ladeboden oder dem Fahrzeugrahmen des Nutzfahrzeugs aufliegt.

Bei einer bevorzugten Ausführungsform der Erfindung weist der Zurrring einen U-förmigen Zurrbügel und einen Quersteg auf, wobei der Zurrbügel und der Quersteg einstückig miteinander ausgebildet sind. Vorzugsweise ist der Zurrring insgesamt einstückig ausgebildet, beispielsweise als Gussteil. Der Quersteg kann in der Lageraufnahme angeordnet sein und bildet eine Drehachse für den Zurrring, so dass dieser von der Benutzungsstellung in eine Nichtbenutzungsstellung gedreht bzw. geschwenkt werden kann.

Besonders bevorzugt ist vorgesehen, dass alle Bauteile, insbesondere die Basisplatte, die Oberplatte und der Zurring, jeweils als Gussteile, vorzugsweise als Stahlgussteile, ausgebildet sind. Die Zurrvorrichtung ist so in großen Stückzahlen kostengünstig herstellbar.

Vorzugsweise weisen jeweils zwei gegenüberliegende Randbereiche der Basisplatte eine Fase auf. Insbesondere können Randbereiche der Basisplatte eine Fase aufweisen, die parallel zur Drehachse des Zurrbügels ausgerichtet ist.

Die Zurrvorrichtung wird vorzugsweise so in einem Nutzfahrzeug montiert, dass die Drehachse des Zurrrings senkrecht zur Fahrzeuglängsachse ausgerichtet ist. Das hat den Vorteil, dass der Zurrring abgeklappt wird, wenn er von beispielsweise einer Baumaschine überfahren wird. Würde die Drehachse parallel zur Fahrzeuglängsrichtung ausgerichtet sein, könnte der Zurrring den Rädern einer Baumaschine nicht ausweichen, was zu einer Beschädigung des Zurrrings führen könnte. Wenn nun, wie es bevorzugt vorgesehen ist, die Randbereiche mit der Fase ebenfalls senkrecht zur Fahrzeuglängsachse ausgerichtet sind, so bildet die Fase einen guten Übergang zum Ladeboden, so dass ein Rad eines Baufahrzeugs leicht über die Zurrvorrichtung rollen kann, ohne diese zu beschädigen.

Insofern ist also vorzugsweise vorgesehen, dass der Lagerbock und der Zurrring bzw. allgemein die Zurrvorrichtung, überfahrbar ausgebildet sind.

Zur Vermeidung einer Beschädigung der Zurrvorrichtung kann zusätzlich vorgesehen sein, dass die Zurrvorrichtung in einen Ladeboden bzw. Bodenbelag des Laderaums des Nutzfahrzeugs versenkt montierbar oder montiert ist. Im abgeklappten Zustand der Zurrvorrichtung ragt diese folglich nicht über die Ladefläche hervor. Konkret kann vorgesehen sein, dass eine Oberseite der Oberplatte unterhalb der Ladefläche angeordnet ist. Durch das vollständige Versenken der Zurrvorrichtung im Ladeboden bzw. im Bodenbelag wird ein Kontakt mit dem Fahrwerk einer Baumaschine und so eine Beschädigung der Zurrvorrichtung beim Beladen des Nutzfahrzeugs besonders wirkungsvoll vermieden.

Die Oberplatte des Lagerbocks kann außerdem eine gewölbte Oberfläche aufweisen. Die gewölbte Oberfläche erleichtert das Überfahren der Zurrvorrichtung und reduziert die Gefahr, möglicherweise das Ladegut, beispielsweise Reifen einer Baumaschine, zu beschädigen.

Um die Gefahr einer Beschädigung des Zurrrings weiter zu reduzieren, ist in einer weiteren bevorzugten Ausführungsform der Erfindung vorgesehen, dass der Lagerbock eine Höhe aufweist, die größer als der Querschnittsdurchmesser des Querstegs und/oder des Zurrbügels des Zurrrings ist. Der Querschnittsdurchmesser bzw. die Höhe des Zurrrings im abgeklappten Zustand ist also vorzugsweise kleiner als die Höhe des Lagerbocks. Damit ist sichergestellt, dass in der Nichtbenutzungsstellung des Zurrrings ein Kontakt mit einem Rad eines Baufahrzeugs, welches auf das Nutzfahrzeug geladen wird, vermieden wird. Das Baufahrzeug rollt vielmehr über die Oberfläche der Oberplatte ab, so dass insbesondere auf den Quersteg keine Querkräfte oder Biegemomente aufgebracht werden, die zu einer Beschädigung des Zurrrings führen können.

Eine weitere Maßnahme, die zur Beschädigung der Zurrvorrichtung beiträgt und in einer bevorzugten Ausführungsform vorgesehen ist, besteht darin, dass die Oberplatte Sacklöcher zur versenkten Aufnahme von Schraubenköpfen aufweist. Insbesondere dienen die Sacklöcher dazu, die Schraubenköpfe derjenigen Schrauben aufzunehmen, die die Oberplatte mit der Basisplatte verbinden. Die Schraubenköpfe ragen so nicht wesentlich über die Oberfläche der Oberplatte vor, so dass eine Beschädigung der Schraubverbindung und/oder der darüber fahrenden Baumaschine vermieden wird.

Im Hinblick auf einen guten Korrosionsschutz ist bevorzugt vorgesehen, dass die Basisplatte feuerverzinkt ist. Die Oberplatte kann zusätzlich oder alternativ mit einem Korrosionsschutz beschichtet sein. Der Zurrring ist vorzugsweise ebenfalls korrosionsgeschützt, beispielsweise durch eine Feuerverzinkung. Alternativ können die Basisplatte, die Oberplatte und der Zurrring jeweils mit einer Zinklamellenbeschichtung korrossionsgeschützt sein. Besonders bevorzugt ist eine Beschichtung aus Zink- und Aluminiumlamellen in einer Chromatverbindung. Eine solche Beschichtung ist beispielsweise unter dem Handelsnamen Dacromet der NOF Metal Coatings Group, Creil Cedex, Frankreich, bekannt.

Der erfindungsgemäße Zurrring kann in einer besonders bevorzugten Variante eine Belastbarkeit von mindestens 10.000 daN, insbesondere mindestens 12.000 daN, insbesondere mindestens 14.000 daN, aufweisen. Es handelt sich also vorzugsweise um einen Zurrring für Schwerlasttransporte, bei welchen beispielsweise schwere Baumaschinen auf einem Fahrzeuganhänger transportiert werden. Um solche großen Massen zu sichern, sind Zurrringe erforderlich, die eine hohe Belastbarkeit aufweisen. Hierzu sind die Zurrringe aus entsprechenden Materialien und in entsprechenden Materialstärken gefertigt.

Insgesamt ist bevorzugt vorgesehen, dass die Zurrvorrichtung, die die Basisplatte, die Oberplatte und den Zurrring umfasst, einen besonders einfachen Aufbau aufweist. Insbesondere sind keine Federelemente oder sonstige filigrane Bauteile vorhanden, die in Folge von Verschmutzung ihre Funktion verlieren können. Der einfache Aufbau der erfindungsgemäßen Zurrvorrichtung bewirkt eine hohe Langlebigkeit. Insbesondere bleibt die Zurrvorrichtung auch in einem verschmutzten Zustand, der beispielsweise nach Beladen des Nutzfahrzeugs mit Schüttgut eintreten kann, weiterhin funktionsfähig bleibt. Darüber hinaus weist die einfach aufgebaute Zurrvorrichtung geringe Herstellungskosten auf.

Ein nebengeordneter Aspekt der Erfindung betrifft ein Nutzfahrzeug, insbesondere einen Anhänger, mit wenigstens einer zuvor beschriebenen Zurrvorrichtung. Dabei ist vorgesehen, dass die Basisplatte der Zurrvorrichtung mit einem Ladeboden oder einem Fahrzeugrahmen des Nutzfahrzeugs schweißverbunden ist. Die Schweißverbindung ermöglicht eine hohe Kraftübertragung, so dass auf den Zurrring wirkende Kräfte über die Oberplatte und Basisplatte gut in den Fahrzeugrahmen oder den Ladeboden eingeleitet werden können.

Ein weiterer nebengeordneter Aspekt der Erfindung betrifft ein Verfahren zur Herstellung eines zuvor beschriebenen Nutzfahrzeugs. Bei dem erfindungsgemäßen Herstellungsverfahren wird die Basisplatte der Zurrvorrichtung mit einem Fahrzeugrahmen des Nutzfahrzeugs verschweißt und anschließend zusammen mit dem Fahrzeugrahmen feuerverzinkt. Daraufhin wird der Zurrring in einer Lageraufnahme der Basisplatte angeordnet und mittels der Oberplatte der Zurrvorrichtung befestigt, indem die Oberplatte mit der Basisplatte verschraubt wird.

Die zweiteilige Ausführung der Zurrvorrichtung kommt hier insoweit vorteilhaft zum Tagen, als die Basisplatte gemeinsam mit dem Fahrzeugrahmen einer Feuerverzinkung unterzogen werden kann. Damit ist ein guter Korrosionsschutz für die Basisplatte gewährleistet. Die Oberplatte, die zum Austausch des Zurrrings ebenfalls austauschbar ist, weist vorzugsweise eine Korrosionsschutzbeschichtung auf. So kann die gut korrosionsgeschützte, insbesondere feuerzinkte, Basisplatte fest am Fahrzeug verbleiben und der Austausch des Zurrbügels lediglich durch Austausch der Oberplatte und des Zurrbügels erreicht werden.

Die Erfindung wird im Folgenden anhand eines Ausführungsbeispiels unter Bezugnahme auf die beigefügten, schematischen Zeichnungen näher erläutert. Darin zeigen
- Fig. 1: eine perspektivische Ansicht einer erfindungsgemäßen Zurrvorrichtung nach einem bevorzugten Ausführungsbeispiel;
- Fig. 2: eine Draufsicht auf die Zurrvorrichtung gemäß Fig. 1; und
- Fig. 3: eine Seitenansicht der Zurrvorrichtung gemäß Fig. 1.

Die Zurrvorrichtung gemäß dem dargestellten Ausführungsbeispiel umfasst einen Lagerbock 10 und einen Zurrring 13. Der Zurrring 13 dient zur Verbindung mit einem Zurrmittel, beispielsweise einem Spanngurt, und ist im Lagerbock 10 drehbar gelagert. Dazu weist der Zurrring 13 einen Quersteg (durch den Lagerbock 10 verdeckt) auf, der sich zwischen den Schenkeln eines U-förmigen Zurrbügels 14 des Zurrrings 13 erstreckt. Der Quersteg ist in einer Lageraufnahme des Lagerbocks 10 angeordnet, die eine Drehachse S des Zurrrings 13 definiert.

Der Lagerbock 10 ist zweiteilig ausgebildet und umfasst eine Basisplatte 11 zur dauerhaften Befestigung an einem Fahrzeug und eine Oberplatte 12 zum Halten des Zurrrings 13. Die Basisplatte 11 und die Oberplatte 12 weisen jeweils einen Kanal mit einem halbkreisförmigen Querschnitt auf, wobei die Kanäle der Basisplatte 11 und der Oberplatte 12 gemeinsam die Lageraufnahme bilden. Die Lageraufnahme ist im Wesentlichen als rohrförmige bzw. zylinderförmige Öffnung ausgebildet und nimmt den Quersteg des Zurrrings 13 auf. Der Quersteg ist in der Lageraufnahme mit einer Spielpassung gehalten.

Die Oberplatte 12 ist zum Halten des Zurrrings 13 mit der Basisplatte lösbar verbunden. Insbesondere weist die Oberplatte 12 bei dem dargestellten Ausführungsbeispiel vier Schraubenlöcher auf, die mit entsprechenden Gewindelöchern in der Basisplatte 11 fluchten. Die Befestigung der Oberplatte 12 auf der Basisplatte erfolgt also über Schrauben, die die Schraubenlöcher der Oberplatte durchgreifen und in die Gewindelöcher der Basisplatte eingreifen. Auf diese Weise ist die Oberplatte mit der Basisplatte schraubverbunden.

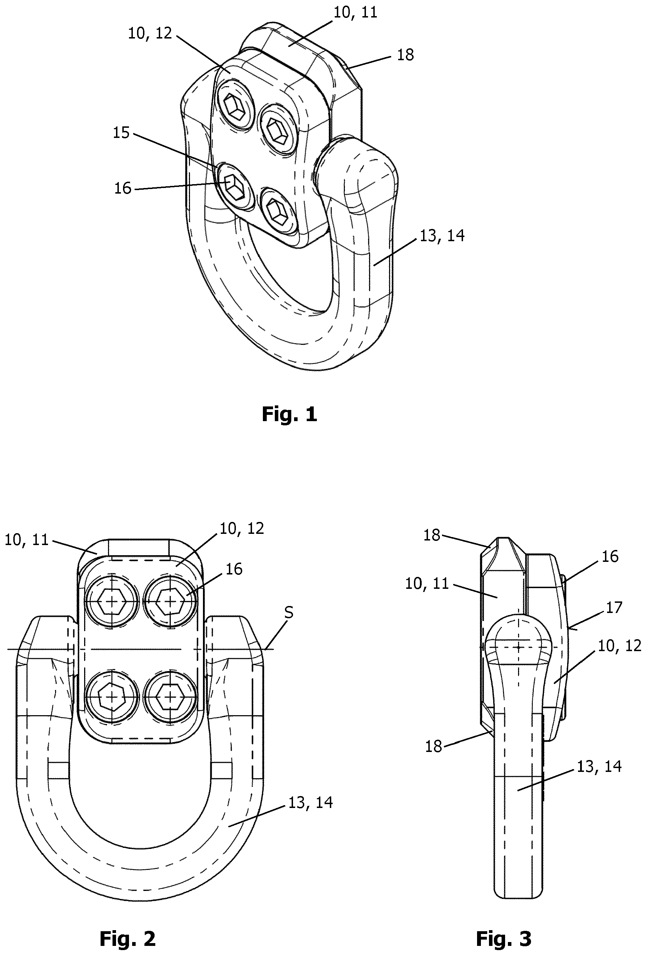

Die Oberplatte 12 weist außerdem Sacklöcher 15 auf, in welche die Schraubenköpfe 16 der Schrauben versenkt sind. So ist gewährleistet, dass die Schraubenköpfe 16 nicht wesentlich über eine Oberfläche 17 der Oberplatte 12 überstehen. Da die Oberfläche 17, wie dies in Fig. 3 erkennbar ist, gewölbt ist, besteht zwar ein leichter Überstand in Teilbereichen des Schraubenkopfs 16. Der Überstand ist jedoch so gering, dass er die Funktion der gewölbten Oberfläche 17, insbesondere einer überhaupt glatten Oberfläche der Oberplatte 12 nicht wesentlich beeinträchtigt. Die gewölbte Oberfläche 17 hat den Zweck, beim Überfahren der Zurrvorrichtung mit beispielsweise einer Baumaschine eine Beschädigung der Zurrvorrichtung oder der Baumaschine zu vermeiden.

Wie in Fig. 3 auch erkennbar ist, weist die Basisplatte 11 zwei gegenüberliegende Randbereiche mit jeweils einer Fase 18 auf. Zur Befestigung der Basisplatte 11 auf einem Fahrzeugrahmen wird die Basisplatte 11 verschweißt. Dabei kann entlang der Fase 18 die Schweißnaht gesetzt werden, so dass das Schweißmaterial zwischen dem von der Fase und dem Fahrzeugrahmen gebildeten Aufnahmeraum aufgenommen wird. Damit kann die Schweißnaht einen kontinuierlichen Übergang vom Fahrzeugrahmen zur Basisplatte 11 bilden.

Vorzugsweise ist die Basisplatte 11 in ihren Randbereichen doppelt gefast, weist also sowohl auf der Unterseite, als auch auf der Oberseite eine Fase 18 auf. Die Fase 18 auf der Oberseite bildet den Übergang von der Schweißnaht, die an der Unterseite ausgebildet ist, weiter und vermeidet so scharfe Kanten, die bei Überfahren der Zurrvorrichtung zu einer Beschädigung der darüber fahrenden Baumaschine führen können.

In Fig. 2 ist die Drehachse S dargestellt, die die Drehbewegung des Zurrrings 13 ermöglicht. Der Zurrring 13 ist also über den Quersteg, der in der Lageraufnahme des Lagerbocks 10 angeordnet ist, um die Drehachse S drehbar.

In Fig. 3 ist außerdem erkennbar, dass der Lagerbock 10 insgesamt eine Höhe aufweist, die höher als die Dicke oder der Querschnitt des Zurrrings 13 ist. Wenn der Zurrring 13 in der Nichtbenutzungsstellung vorliegt, wie sie in den Fig. 1-3 dargestellt ist, kann die Zurrvorrichtung leicht überfahren werden, ohne dass eine Baumaschine den Zurrring 13 selbst belastet. Die Überfahrkräfte werden vielmehr von dem Lagerbock 10 aufgenommen. So wird vermieden, dass auf den Quersteg des Zurrrings 13 Biegekräfte oder Biegemomente aufgebracht werden, die zu einer Beschädigung der Zurrvorrichtung führen können. Die auf die Oberplatte 12 wirkenden Überfahrkräfte werden vielmehr über den Flächenkontakt zwischen der Oberplatte 12 und der Basisplatte 11 an die Basisplatte 11 und von dort über den Flächenkontakt zwischen Basisplatte 11 und Fahrzeugrahmen an den Fahrzeugrahmen übertragen.

In einem montierten Zustand auf einem Fahrzeugrahmen ist vorgesehen, dass die Basisplatte 11 der Zurrvorrichtung fest mit dem Fahrzeugrahmen verschweißt ist und zusammen mit dem Fahrzeugrahmen feuerverzinkt wird. Mit anderen Worten bildet die Basisplatte einen festen Bestandteil des feuerverzinkten Fahrzeugrahmens.

Die Oberplatte 12 und der Zurrring 13 sind selbstständig korrosionsbeschichtet und werden erst nach der Feuerverzinkung des Fahrzeugrahmens und der darauf angeschweißten Basisplatte 11 mit der Basisplatte 11 verbunden. Wenn der Zurrring 13 nun beschädigt ist, beispielsweise weil vor dem Beladen des Nutzfahrzeugs mit einer Baumaschine vergessen wurde, den Zurrring 13 in die Nichtbenutzungsstellung zu klappen, so kann der beschädigte Zurrring 13 einfach durch Lösen der Oberplatte 12 von der Basisplatte 11 ausgetauscht werden. Der Austausch ist besonders einfach und schnell möglich, da ein Korrosionsschutz beim Austausch nicht nochmals aufgebracht werden muss. Vielmehr ist die Basisplatte 11 bereits durch die Feuerverzinkung mit dem Fahrzeugrahmen gemeinsam korrosionsgeschützt. Die Oberplatte 12 und der Zurrring 13 liegen ebenfalls bereits mit einer Korrosionsschutzbeschichtung vor.

### Bezugszeichenliste

- 10: Lagerbock
- 11: Basisplatte
- 12: Oberplatte
- 13: Zurrring
- 14: Zurrbügel
- 15: Loch
- 16: Schraubenkopf
- 17: Oberfläche
- 18: Fase
- S: Drehachse

## Patentansprüche

1. Zurrvorrichtung für ein Nutzfahrzeug mit einem Zurrring (13) zur Verbindung mit einem Zurrmittel und mit einem Lagerbock (10) zur Befestigung an einem Nutzfahrzeug, wobei der Lagerbock (10) eine Basisplatte (11) zur dauerhaften Befestigung am Nutzfahrzeug und eine Oberplatte (12) zum Halten des Zurrrings (13) aufweist, wobei die Basisplatte (11) wenigstens einen Randbereich mit einer Fase (18) aufweist, und die Oberplatte lösbar mit der Basisplatte verbindbar oder verbunden ist, **dadurch gekennzeichnet, dass** im montierten Zustand der Zurrvorrichtung (10) am Nutzfahrzeug zwischen der Fase (18) und einer Fahrzeugfläche eine keilförmige Ausnehmung zur Aufnahme einer Schweißnaht gebildet ist.

2. Zurrvorrichtung nach Anspruch 1,
**dadurch gekennzeichnet, dass**
die Oberplatte (12) mit der Basisplatte (11) verschraubt ist.

3. Zurrvorrichtung nach Anspruch 1 oder 2,
**dadurch gekennzeichnet, dass**
der Zurrring (13) in einer zwischen der Basisplatte (11) und der Oberplatte (12) ausgebildeten Lageraufnahme drehbar gelagert ist.

4. Zurrvorrichtung nach einem der vorhergehenden Ansprüche,
**dadurch gekennzeichnet, dass**
der Zurrring (13) einen u-förmigen Zurrbügel (14) und einen Quersteg aufweist, die miteinander einstückig ausgebildet sind.

5. Zurrvorrichtung nach einem der vorhergehenden Ansprüche,
**dadurch gekennzeichnet, dass**
zwei gegenüberliegend angeordnete Randbereiche jeweils eine Fase (18) aufweisen.

6. Zurrvorrichtung nach einem der vorhergehenden Ansprüche,
**dadurch gekennzeichnet, dass**
der Lagerbock (10) und der Zurrring (13) überfahrbar sind.

7. Zurrvorrichtung nach einem der vorhergehenden Ansprüche,
**dadurch gekennzeichnet, dass**
die Oberplatte (12) eine gewölbte Oberfläche (17) aufweist.

8. Zurrvorrichtung nach einem der vorhergehenden Ansprüche,
**dadurch gekennzeichnet, dass**
der Lagerbock (10) eine Höhe aufweist, die größer als der Querschnittsdurchmesser des Querstegs und/oder des Zurrbügels (14) des Zurrrings (13) ist.

9. Zurrvorrichtung nach einem der vorhergehenden Ansprüche,
**dadurch gekennzeichnet, dass**
die Oberplatte (12) Sacklöcher (15) zur versenkten Aufnahme von Schraubenköpfen (16) aufweist.

10. Zurrvorrichtung nach einem der vorhergehenden Ansprüche,
**dadurch gekennzeichnet, dass**
die Basisplatte (11) feuerverzinkt und/oder die Oberplatte (12) mit einem Korrosionsschutz beschichtet ist.

11. Zurrvorrichtung nach einem der vorhergehenden Ansprüche,
**dadurch gekennzeichnet, dass**
der Zurrring (13) eine Belastbarkeit von mindestens 10.000 daN, insbesondere mindestens 12.000 daN, insbesondere mindestens 14.000 daN, aufweist.

12. Nutzfahrzeug, insbesondere Anhänger, mit wenigstens einer Zurrvorrichtung mit einem Zurrring (13) zur Verbindung mit einem Zurrmittel und mit einem Lagerbock (10) zur Befestigung an dem Nutzfahrzeug, wobei der Lagerbock (10) eine Basisplatte (11) und eine Oberplatte (12) zum Halten des Zurrrings (13) aufweist und die Oberplatte (12) lösbar mit der Basisplatte (11) verbindbar oder verbunden ist,
**dadurch gekennzeichnet, dass**
die Basisplatte (11) mit einem Ladeboden oder einem Fahrzeugrahmen des Nutzfahrzeugs schweißverbunden ist.

13. Verfahren zur Herstellung eines Nutzfahrzeugs nach Anspruch 12, wobei die Basisplatte (11) der Zurrvorrichtung mit einem Fahrzeugrahmen des Nutzfahrzeugs verschweißt und anschließend zusammen mit dem Fahrzeugrahmen feuerverzinkt wird, und wobei anschließend der Zurrring (13) in einer Lageraufnahme der Basisplatte angeordnet und mittels der Oberplatte (12) der Zurrvorrichtung befestigt wird, indem die Oberplatte (12) mit der Basisplatte (11) verschraubt wird.

## Claims

1. Lashing device for a commercial vehicle with a lashing ring (13) for connection to a lashing means and with a bearing block (10) for attachment to a commercial vehicle,
wherein the bearing block (10) has a base plate (11) for permanent attachment to the commercial vehicle and a top plate (12) for holding the lashing ring (13), wherein the base plate (11) has at least one edge area with a chamfer (18), and the top plate is releasably connectable or connected to the base plate,
**characterized in that**
when the lashing device (10) is mounted on the commercial vehicle, a wedge-shaped recess for receiving a weld seam is formed between the chamfer (18) and a vehicle surface.

2. Lashing device according to Claim 1, **characterized in that** the top plate (12) is bolted to the base plate (11) .

3. Lashing device according to Claim 1 or 2, **characterized in that** the lashing ring (13) is mounted rotatably in a bearing receptacle formed between the base plate (11) and the top plate (12).

4. Lashing device according to any one of the preceding claims, **characterized in that** the lashing ring (13) has a U-shaped lashing bracket (14) and a transverse web, which are formed integrally with one another.

5. Lashing device according to any one of the preceding claims, **characterized in that** two oppositely arranged edge areas each have a chamfer (18).

6. Lashing device according to any one of the preceding claims, **characterized in that** the bearing block (10) and the lashing ring (13) can be driven over.

7. Lashing device according to any one of the preceding claims, **characterized in that** the top plate (12) has a convex surface (17).

8. Lashing device according to any one of the preceding claims, **characterized in that** the bearing block (10) has a height that is greater than the cross-sectional diameter of the transverse web and/or the lashing bracket (14) of the lashing ring (13).

9. Lashing device according to any one of the preceding claims, **characterized in that** the top plate (12) has blind holes (15) for countersunk accommodation of screw heads (16).

10. Lashing device according to any one of the preceding claims, **characterized in that** the base plate (11) is hot-dip galvanised and/or the top plate (12) is coated with an anti-corrosion agent.

11. Lashing device according to any one of the preceding claims, **characterized in that** the lashing ring (13) has a load capacity of at least 10,000 daN, in particular at least 12,000 daN, particularly at least 14,000 daN.

12. Commercial vehicle, in particular a trailer, with at least one lashing device having a lashing ring (13) for connecting with a lashing means, and with a bearing block (10) for attachment to the commercial vehicle, wherein the bearing block (10) has a base plate (11) and a top plate (12) for holding the lashing ring (13), and the top plate (12) is releasably connectable or connected to the base plate (11), **characterized in that** base plate (11) is welded to a loading floor or a vehicle frame of the commercial vehicle.

13. Method for manufacturing a commercial vehicle according to Claim 12, wherein the base plate (11) of the lashing device is welded to a vehicle frame of the commercial vehicle and then hot-dip galvanised together with the vehicle frame, and wherein the lashing ring (13) is then arranged in a bearing receptacle of the base plate and fastened with the top plate (12) of the lashing device by bolting the top plate (12) to the base plate (11) .

## Revendications

1. Dispositif d'arrimage pour un véhicule utilitaire avec un anneau d'arrimage (13) pour la liaison avec un moyen d'arrimage et avec un bloc de support (10) pour fixation à un véhicule utilitaire,
sachant que le bloc de support (10) comporte une plaque de base (11) pour la fixation permanente sur le véhicule utilitaire et une plaque supérieure (12) pour le maintien de l'anneau d'arrimage (13), sachant que la plaque de base (11) comporte au moins une zone de bordure avec un chanfrein (18) et la plaque supérieure peut être reliée ou est reliée de façon amovible à la plaque de base,
**caractérisé en ce qu'**
à l'état monté du dispositif d'arrimage (10) sur le véhicule utilitaire, un évidement en forme de coin est formé entre le chanfrein (18) et une surface du véhicule pour recevoir un cordon de soudure.

2. Dispositif d'arrimage selon la revendication 1, **caractérisé en ce que** la plaque supérieure (12) est vissée à la plaque de base (11).

3. Dispositif d'arrimage selon la revendication 1 ou 2, **caractérisé en ce que** l'anneau d'arrimage (13) est logé pouvant tourner dans un logement de support constitué entre la plaque de base (11) et la plaque supérieure (12) .

4. Dispositif d'arrimage selon l'une quelconque des revendications précédentes, **caractérisé en ce que** l'anneau d'arrimage (13) comporte un étrier d'arrimage en forme de U (14) et une nervure transversale, qui sont constitués ensemble en une seule pièce.

5. Dispositif d'arrimage selon l'une quelconque des revendications précédentes, **caractérisé en ce que** les zones de bordure disposées opposées comportent respectivement un chanfrein (18).

6. Dispositif d'arrimage selon l'une quelconque des revendications précédentes, **caractérisé en ce que** le bloc de support (10) et l'anneau d'arrimage (13) peuvent être dépassés.

7. Dispositif d'arrimage selon l'une quelconque des revendications précédentes, **caractérisé en ce que** la plaque supérieure (12) comporte une surface bombée (17) .

8. Dispositif d'arrimage selon l'une quelconque des revendications précédentes, **caractérisé en ce que** le bloc de support (10) comporte une hauteur qui est plus grande que le diamètre de section de la nervure transversale et/ou de l'étrier d'arrimage (14) de l'anneau d'arrimage (13).

9. Dispositif d'arrimage selon l'une quelconque des revendications précédentes, **caractérisé en ce que** la plaque supérieure (12) comporte des trous borgnes (15) pour le logement noyé de têtes de vis (16).

10. Dispositif d'arrimage selon l'une quelconque des revendications précédentes, **caractérisé en ce que** la plaque de base (11) est galvanisée et/ou la plaque supérieure (12) est revêtue d'une protection anticorrosion.

11. Dispositif d'arrimage selon l'une quelconque des revendications précédentes, **caractérisé en ce que** l'anneau d'arrimage (13) comporte une capacité de charge d'au moins 10.000 daN, en particulier d'au moins 12.000 daN, en particulier d'au moins 14.000 daN.

12. Véhicule utilitaire, en particulier remorque, avec au moins un dispositif d'arrimage avec un anneau d'arrimage (13) pour liaison avec un moyen d'arrimage et avec un bloc de support (10) pour la fixation au véhicule utilitaire, sachant que le bloc de support (10) comporte une plaque de base (11) et une plaque supérieure (12) pour maintenir l'anneau d'arrimage (13) et la plaque supérieure (12) peut être reliée ou est reliée de façon amovible à la plaque de base (11), **caractérisé en ce que** la plaque de base (11) est reliée par soudure à un fond de chargement ou un châssis de véhicule du véhicule utilitaire.

13. Procédé de fabrication d'un véhicule utilitaire selon la revendication 12, sachant que la plaque de base (11) du dispositif d'arrimage est soudée à un châssis de véhicule du véhicule utilitaire et est ensuite galvanisée avec le châssis de véhicule et sachant qu'ensuite l'anneau d'arrimage (13) est disposé dans un logement de support de la plaque de base et est fixé au moyen de la plaque supérieure (12) du dispositif d'arrimage, la plaque supérieure (12) étant vissée à la plaque de base (11).
